# EUROPÄISCHE PATENTSCHRIFT

(11) **EP 2 555 489 B1**
(45) Veröffentlichungstag und Bekanntmachung des Hinweises auf die Patenterteilung: **24.09.2014**
(21) Anmeldenummer: 12176527.5
(22) Anmeldetag: 16.07.2012
(51) Int. Cl.: H04L 29/08

(54) **Verfahren und Einrichtung zum Konfigurieren von Endgeräten**
Method and device for configuring terminals
Procédé et dispositif de configuration de terminaux

(30) Priorität: 05.08.2011 DE 102011080538
(43) Veröffentlichungstag der Anmeldung: 06.02.2013
(73) Patentinhaber: Vodafone Holding GmbH, 40213 Düsseldorf (DE)
(72) Erfinder: Rodermund, Friedhelm, 56077 Koblenz (DE); Hying, Thomas, 40547 Düsseldorf (DE)
(74) Vertreter: Jostarndt, Hans-Dieter

(56) Entgegenhaltungen:
- EP-A1- 2 299 655
- WO-A1-2009/021212
- US-A1- 2007 250 933

## Beschreibung

Die Erfindung bezieht sich auf die Konfiguration von Endgeräten, insbesondere Mobilfunkendgeräten. Die Erfindung betrifft ein Verfahren und eine Servereinrichtung zum Konfigurieren von Endgeräten.

Elektronische, prozessorbasierte Endgeräte, insbesondere Mobilfunkendgeräte, wie beispielsweise Mobiltelefone, sogenannte Smartphones, Notebookcomputer oder dergleichen, müssen zur Durchführung verschiedener Aufgaben und zur Nutzung von Diensten zunächst konfiguriert werden. Dienste, die eine vorherige Konfiguration erfordern, sind beispielsweise Dienste zur Nachrichtenübermittlung, wie beispielsweise E-Mail oder der Multimedia Messaging Service, die in einem Mobilfunknetz oder einem anderen Kommunikationsnetz bereitgestellt werden. Bei der Konfiguration werden Programme in den Endgeräten installiert, und es werden Parameter hinterlegt, die zur Ausführung von Programmen und zur Nutzung der Dienste herangezogen werden. Bei Mobilfunkendgeräten sind diese Parameter in der Regel an das Heimatmobilfunknetz angepasst, in dem das Endgerät betrieben werden soll. Daher wird die Konfiguration üblicherweise von dem Betreiber dieses Mobilfunknetzes vorgenommen.

Konfigurationsparameter werden in den Endgeräten üblicherweise in einer bestimmten Datenstruktur abgelegt. Die Datenstruktur weist Elemente auf, die den Wert der Parameter enthalten und denen zur Identifizierung der zugehörigen Parameter eine Bezeichnung zugeordnet ist. Ein Beispiel für eine solche Datenstruktur ist eine Baumstruktur, wie sie beispielsweise bei einer Endgeräteverwaltung entsprechend des von der Open Mobile Alliance (OMA) spezifizierten OMA Device Management (OMA DM) vorgesehen ist, die zunehmend insbesondere in Mobilfunkendgeräten zur Anwendung kommt. Die Elemente der Baumstruktur entsprechen den Knoten des Baums, denen jeweils eine Bezeichnung zugeordnet ist und die einen Parameterwert enthalten können (ein Knoten muss keinen Parameterwert enthalten; insbesondere können innere Knoten der Baumstruktur auch unbefüllt sein und lediglich als Anschlusspunkt ihrer Kinderknoten an die Baumstruktur dienen).

Die Teile der gesamten Datenstruktur, in der die Konfigurationsparameter in einem Endgerät abgelegt sind, die jeweils die Konfiguration einer bestimmten Anwendung oder eines bestimmten Dienstes betreffen, umfassen typischerweise eine Mehrzahl einzelner Elemente, die zum Teil gerätetyp- und herstellerübergreifend festgelegt sind, die jedoch zum Teil auch hersteller- und/oder gerätetypspezifisch festgelegt sind. Die Elemente können bereits bei der Herstellung des Endgeräts in die Datenstruktur eingefügt werden. In der Regel müssen jedoch zumindest einige Elemente bei der Konfiguration ergänzt werden. Dabei sind in der Regel bei Endgeräten verschiedener Hersteller und/oder verschiedener Typen jeweils andere Elemente bei der Konfiguration zu ergänzen.

Die Anpassungen von Konfigurationsparametern eines Endgeräts eines bestimmten Gerätetyps anhand von Anweisungen zur gegebenenfalls erforderlichen Erzeugung der relevanten Elemente der Datenstruktur und zur Speicherung von Parameterwerten in den dafür vorgesehenen Elementen der Datenstruktur erfordert somit die Kenntnis der spezifischen Datenstruktur, die das Endgerät zur Speicherung der Konfigurationsparameter enthält. Eine Anpassung von Konfigurationsdaten anhand derartiger Anweisungen kann beispielsweise mittels des OMA DM durchgeführt werden. Ein Problem besteht jedoch darin, dass die genaue Datenstruktur zur Speicherung der Konfigurationsdaten eines Endgeräts oftmals nicht genau bekannt ist. Bevor Konfigurationsdaten eines Endgeräts verändert werden können, muss daher in der Regel die Datenstruktur von dem Hersteller des Endgeräts mitgeteilt werden.

Die WO 2009/021212 A1 offenbart Ausführungsbeispiele eines Verfahrens und eines Systems um die Konfiguration von mobilen Endgeräten zu managen. Eines der beschriebenen Verfahren nutzt eines oder mehrere fortgeschrittene Befehle des OMA DM Protokolls.

Weitere bekannte Konfigurationsverfahren können ohne eine genaue Kenntnis der Konfigurationsdatenstruktur des zu konfigurierenden Endgeräts durchgeführt werden. Bei diesen Verfahren werden Konfigurationsparameter für bestimmte Dienste oder Anwendungen zur erstmaligen Konfiguration in einem vorgegebenen Format bzw. mit fest vorgegebenen Parameterbezeichnungen an das Endgerät übergeben, und ein in dem Endgerät implementierter Konfigurationsmechanismus sorgt dafür, dass die Konfigurationsparameter in den dafür vorgesehenen Elementen der Datenstruktur gespeichert werden. Ein Beispiel für ein solches Konfigurationsverfahren ist das ebenfalls von der OMA spezifizierte OMA Client Provisioning (OMA CP).

Ältere Konfigurationsverfahren, wie OMA CP, weisen jedoch oftmals eine Reihe von Nachteilen auf. Insbesondere bei OMA CP gehört hierzu, dass lediglich eine einseitige Übermittlung von Nachrichten von einem Konfigurationsserver zu dem zu konfigurierenden Endgerät vorgesehen ist und das Endgerät keine Nachrichten an den Konfigurationsserver senden kann. Hierdurch kann das Endgerät insbesondere keine Rückmeldung über den Erfolg der Konfiguration liefern, wie es bei neueren Verfahren, wie insbesondere OMA DM möglich ist. Des Weiteren erlaubt OMA CP keine Konfiguration, die ohne Interaktion mit dem Nutzer des Endgeräts durchgeführt werden kann. Zudem ist der Funktionsumfang von OMA CP deutlich geringer als der von OMA DM. So können mittels OMA CP Funktionen, wie Firmware Updates, Installation von Applikationen sowie verschiedene Diagnosefunktionen in Bezug auf Endgeräteparameter, wie Akkuladezustand, Netzabdeckung etc., nicht durchgeführt werden, und eine Erweiterung des Funktionsumfangs ist nicht mehr vorgesehen.

Unter anderem aus den zuvor genannten Gründen ist daher eine Konfiguration mittels OMA DM vorzuziehen, bei der jedoch das beschriebene Problem besteht, dass die Datenstruktur zur Speicherung der Konfigurationsdaten häufig nicht bekannt ist.

Es ist eine Aufgabe der Erfindung, eine Konfiguration von Endgeräten anhand von Anweisungen zur Befüllung einzelner der Konfigurationsdatenstruktur der Endgeräte zu ermöglichen, die unabhängig von Vorabinformationen über die Datenstruktur vorgenommen werden kann, die von einem Dritten geliefert werden.

Die Aufgabe wird gelöst durch ein Verfahren gemäß dem Patentanspruch 1 und durch eine Servereinrichtung gemäß dem Patentanspruch 12 Ausgestaltungen des Verfahrens und der Servereinrichtung sind in den abhängigen Ansprüchen angegeben.

Gemäß einem ersten Aspekt der Erfindung wird ein Verfahren zum Konfigurieren von Endgeräten geschaffen. Bei dem Verfahren werden Werte von Parametern in den Endgeräten innerhalb einer Datenstruktur gespeichert, welche jeweils ein Element mit einer zugehörigen Bezeichnung für einen Parameter enthält. Das Verfahren umfasst die folgenden Schritte: (i) Übermitteln einer ersten Konfigurationsnachricht an ein erstes Endgerät, wobei es sich bei der ersten Konfigurationsnachricht um eine Konfigurationsnachricht gemäß der OMA Client Provisioning- Spezifikation handelt und wobei die Konfigurationsnachricht Parameterwerte enthält und das Endgerät (101) über Anwendungen verfügt und die Parameterwerte aufgrund des Empfangs der Konfigurationsnachricht automatisch in den zugehörigen Elementen der in dem ersten Endgerät gespeicherten Datenstruktur hinterlegt werden, (ii) Auslesen der die Parameterwerte enthaltenden Datenstruktur aus dem ersten Endgerät, (iii) Auswerten der ausgelesenen Datenstruktur in einer Servereinrichtung, wobei die Auswertung eine Ermittlung der Elemente der ausgelesenen Datenstruktur, in denen die Parameterwerte gespeichert worden sind, und eine Bestimmung der Bezeichnungen dieser Elemente und/oder einen Vergleich zwischen der ausgelesenen Datenstruktur und einer weiteren, vor Übermittlung der ersten Konfigurationsnachricht aus dem Endgerät ausgelesenen Ausgangsdatenstruktur umfasst, (iv) Erzeugen einer zweiten Konfigurationsnachricht mit Anweisungen zur Hinterlegungen wenigstens eines der Parameterwerte in einem zweiten Endgerät, wobei die Anweisungen in Abhängigkeit von dem Ergebnis der Auswertung generiert werden und die ermittelten Bezeichnung des Elements, in dem der Parameterwerte gespeichert ist, enthalten, und (v) Übermitteln der zweiten Konfigurationsnachricht an das zweite Endgerät.

Gemäß einem weiteren Aspekt der Erfindung wird eine Servereinrichtung zum Konfigurieren von Endgeräten bereitgestellt. Mittels der Servereinrichtung werden Werte von Parametern in den Endgeräten innerhalb einer Datenstruktur gespeichert, welche jeweils ein Element mit einer zugehörigen Bezeichnung für einen Parameter enthält. Die Servereinrichtung ist dazu ausgestaltet, (i) eine erste Konfigurationsnachricht an ein erstes Endgerät zu übermitteln, wobei es sich bei der ersten Konfigurationsnachricht um eine Konfigurationsnachricht gemäß der OMA Client Provisioning- Spezifikation handelt und wobei die Konfigurationsnachricht Parameterwerte enthält und das Endgerät (101) über Anwendungen verfügt und die Parameterwerte aufgrund des Empfangs der Konfigurationsnachricht automatisch in den zugehörigen Elementen der in dem ersten gespeicherten Datenstruktur hinterlegt werden, (ii) die Parameterwerte enthaltende Datenstruktur aus dem ersten Endgerät auszulesen, (iii) die ausgelesene Datenstruktur auszuwerten, wobei die Auswertung eine Ermittlung der Elemente der ausgelesenen Datenstruktur, in denen die Parameterwerte gespeichert worden sind, und eine Bestimmung der Bezeichnungen dieser Elemente und/oder einen Vergleich zwischen der ausgelesenen Datenstruktur und einer weiteren, vor Übermittlung der ersten Konfigurationsnachricht aus dem Endgeräte ausgelesenen Ausgangsdatenstruktur umfasst, (iv) eine zweite Konfigurationsnachricht mit Anweisungen zur Hinterlegung wenigstens eines der Parameterwerte in einem zweiten Endgerät zu erzeugen, wobei die Anweisungen in Abhängigkeit von dem Ergebnis der Auswertung generiert werden und die ermittelten Bezeichnung des Elements, in dem der Parameterwerte gespeichert ist, enthalten, und (v) die zweite Konfigurationsnachricht an das zweite Endgerät zu übermitteln.

Bei dem Verfahren bzw. von der Servereinrichtung werden anhand einer Auswertung einer aus dem Endgerät ausgelesenen Datenstruktur die Elemente der Datenstruktur ermittelt, in denen bestimmte Konfigurationsparameter zu speichern sind. Durch eine Ermittlung der Elemente der ausgelesenen Datenstruktur, in denen bestimmte Parameterwerte gespeichert worden sind, lassen sich insbesondere die Bezeichnungen der Elemente ermitteln. Ein Vergleich zwischen der ausgelesenen Datenstruktur mit den Parameterwerten und der Ausgangsdatenstruktur erlaubt eine Bestimmung der Elemente, die in der Ausgangsdatenstruktur zu ergänzen sind, um die Parameterwerte in dem Endgerät zu hinterlegen.

Die Parameterwerte werden zunächst anhand der ersten Konfigurationsnachricht in dem ersten Endgerät gespeichert. Zur Konfiguration des zweiten Endgeräts wird eine zweite Konfigurationsnachricht verwendet. Eine Ausgestaltung des Verfahrens und der Servereinrichtung sieht vor, dass die erste Konfigurationsnachricht einem ersten Typ und die zweite Konfigurationsnachricht einem zweiten Typ angehört.Die erste Konfigurationsnachricht wird in einer Ausgestaltung des Verfahrens und der Servereinrichtung in dem Endgerät ausgewertet, um die Parameterwerte in dem Endgerät zu speichern. Das erste Endgerät verfügt über eine Anwendung, welche die Parameterwerte aufgrund des Empfangs der ersten Konfigurationsnachricht automatisch in der Datenstruktur speichert. Insbesondere handelt es sich bei der der ersten Konfigurationsnachricht um eine Konfigurationsnachricht gemäß der OMA Client Provisioning-Spezifikation. Eine solche Konfigurationsnachricht wird insbesondere zur Erstkonfiguration (so genannten Provisionierung) des Endgeräts eingesetzt und kann innerhalb des Endgeräts derart ausgewertet werden, dass die enthaltenen Parameterwerte automatisch in der Konfigurationsdatenstruktur gespeichert werden.

Die zweite Konfigurationsnachricht, die bereits Anweisungen zur Erzeugung oder Modifikation eines oder mehrerer einzelner Elemente enthält, ist in einer Ausgestaltung eine Konfigurationsnachricht entsprechend der eingangs bereits erwähnten OMA DM-Spezifikation. In diesem Fall enthält die OMA DM-Nachricht insbesondere die zu konfigurierenden Parameter und deren Werte.

Die Ausgangsdatenstruktur wird vorzugsweise ebenfalls anhand einer Nachricht des zweiten Typs, d.h. insbesondere einer OMA DM-Nachricht, welche die ent - sprechenden Kommandos umfasst, aus dem Endgerät ausgelesen. Um eine Interaktion mit dem Endgerät mittels Nachrichten des zweiten Typs vornehmen zu können, ist in der Regel eine entsprechende Vorkonfiguration des Endgeräts erforderlich, bei der beispielsweise Informationen über den die Nachrichten sendenden Konfigurationsserver und/oder Authentisierungsdaten für die Konfiguration in dem Endgerät hinterlegt werden. Diese Vorkonfiguration wird vorzugsweise anhand einer Konfigurationsnachricht des ersten Typs vorgenommen. Sofern die Ausgangsdatenstruktur vor der Übermittlung der zuvor genannten ersten Konfigurationsnachricht ausgelesen wird, wird vor der Abfrage der Ausgangsdatenstruktur eine separate Konfigurationsnachricht gesendet. Sofern die Ausgangsdatenstruktur nicht ausgelesen wird, kann die Vorkonfiguration auch anhand der ersten Konfigurationsnachricht vorgenommen werden.

Eine Ausgestaltung des Verfahrens und der Servereinrichtung sieht vor, dass die zweite Konfigurationsnachricht Anweisungen umfasst, mit denen die Abweichungen der ausgelesenen Datenstruktur von der Ausgangsdatenstruktur erzeugt werden können. Auf diese Weise kann insbesondere ein zweites Endgerät, welches die Ausgangsdatenstruktur aufweist, derart konfiguriert werden, dass die Parameterwerte in den hierfür vorgesehenen Elementen der Datenstruktur gespeichert werden. Die Ausgangsdatenstruktur kann beispielsweise die Datenstruktur sein, die nach der Herstellung des Endgeräts vorliegt, und angepasst wird, um das Endgerät für die Nutzung von Diensten oder Anwendungen zu konfigurieren. Diese Anpassung kann mittels der zweiten Konfigurationsnachricht vorgenommen werden. Die Abweichungen der ausgelesenen Datenstruktur mit den Parameterwerten und der Ausgangsdatenstruktur können durch den Vergleich zwischen diesen Datenstrukturen bestimmt werden.

Eine weitere Ausgestaltung des Verfahrens und der Servereinrichtung beinhaltet, dass aufgrund der Auswertung der aus dem ersten Endgerät ausgelesenen Datenstruktur wenigstens ein gerätetypspezifisches Konfigurationsprofil erstellt wird und die zweite Konfigurationsnachricht anhand des Konfigurationsprofils erzeugt wird. Das Konfigurationsprofil kann in der Servereinrichtung gespeichert werden und sodann zur Konfiguration von zweiten Endgeräten herangezogen werden. Somit erstellt die Servereinrichtung quasi in einem Selbstlernverfahren Konfigurationsprofile für die zukünftige Konfiguration von Endgeräten.

Zumindest einige Elemente der Datenstruktur, in denen von der Servereinrichtung übermittelte Parameterwerte gespeichert werden, sind in der Ausgangsdatenstruktur nicht vorhanden und müssen erstellt werden. Daher ist in einer Ausführungsform des Verfahrens und der Servereinrichtung vorgesehen, dass die Auswertung der ausgelesenen Datenstruktur eine Ermittlung von Elementen der Datenstruktur umfasst, die aufgrund der ersten Konfigurationsnachricht in dem ersten Endgerät angelegt werden. Diese kann wiederum anhand des Vergleichs mit der Ausgangsdatenstruktur vorgenommen werden. Eine verbundene Ausgestaltung des Verfahrens und der Servereinrichtung ist dadurch gekennzeichnet, dass die zweite Konfigurationsnachricht Anweisungen zur Anlage der ermittelten Elemente innerhalb der Datenstruktur in dem zweiten Endgerät umfasst. Innerhalb des ersten Endgeräts werden diese Elemente aufgrund des Empfangs der ersten Konfigurationsnachricht von der Anwendung des Endgeräts automatisch erzeugt.

Eine weitere Ausgestaltung des Verfahrens und der Serverereinrichtung beinhaltet, dass die erste Konfigurationsnachricht Parameterwerte enthält, die sich auf einen Client des Endgeräts beziehen, und eine erste Auswertung der ausgelesenen Datenstruktur zunächst für diesen Client vorgenommen wird, dass eine weitere Konfigurationsnachricht gesendet wird, die Parameterwerte in Bezug auf einen weiteren Client des Endgeräts enthält und eine weitere Auswertung einer weiteren ausgelesenen Datenstruktur in Bezug auf den weiteren Client vorgenommen wird, und dass die Anweisungen in der zweiten Konfigurationsnachricht in Abhängigkeit von der ersten und der weiteren Auswertung generiert werden. Die erste und die weitere Konfigurationsnachrichten sind vorzugsweise beide Nachrichten des ersten Typs. Clients des Endgeräts umfassen insbesondere Anwendungen bzw. Funktionen für den Zugriff auf Dienste, wie E-Mail, Multimedia Messaging Service (MMS), Internetbrowsing. Zu jedem Dienst gehört dabei jeweils ein Client des Endgeräts. Durch die einzelne Konfiguration und Auswertung verschiedener Clients des Endgeräts lassen sich insbesondere Mehrdeutigkeiten auflösen, die sich dann ergeben können, wenn derselbe Parameterwerte (ggf. mit verschiedenen Bezeichnungen) in verschiedene Teile der Konfigurationsdatenstruktur eingetragen wird, die jeweils einem Client zugeordnet sind.

Eine Weiterbildung des Verfahrens und der Servereinrichtung sieht vor, dass die Datenstruktur einen Baum mit mehreren Ebenen umfasst, dessen Elemente Knoten sind, die jeweils einen Parameterwert enthalten und/oder mit einem weiteren Knoten einer tieferen Ebene verbunden sind. Die mit weiteren Knoten einer tieferen Ebene verbundenen Knoten, werden auch als innere Knoten bezeichnet, sofern es sich nicht um die so genannte Wurzel des Baums handelt. Knoten, die nicht mit weiteren Knoten des Baums in einer tieferen Ebene verbunden sind, werden auch als Blattknoten bezeichnet. Die Parameterwerte werden in einer Ausgestaltung in den Blattknoten gespeichert, während die inneren Knoten zur Gruppierung der verbundenen Knoten der tieferen Ebenen vorgesehen sind. Grundsätzlich können Parameterwerte jedoch auch in inneren Knoten gespeichert werden.

Die Konfigurationsdatenstrukturen sind, wie eingangs erläutert, in der Regel gerätespezifisch. Daher können anhand der Auswertung der aus einem bestimmten ersten Endgerät ausgelesenen Datenstruktur nur Anweisungen zur Konfiguration eines zweiten Endgeräts desselben Typs wie das erste Endgerät ermittelt werden. Insoweit beinhaltet eine Ausgestaltung des Verfahrens und der Servereinrichtung, dass es sich bei dem ersten und dem zweiten Endgerät um Endgeräte genau eines Typs handelt.

Eine weitere Ausgestaltung des Verfahrens und der Servereinrichtung sieht vor, dass die erste und/oder die zweite Konfigurationsnachricht über ein Mobilfunknetz gesendet werden. Dies erlaubt insbesondere eine einfache Konfiguration mobiler Endgeräte.

Neben dem Verfahren und der Servereinrichtung wird ein Computerprogramm mit einem Softwarecode bereitgestellt, der so angepasst ist, dass er ein Verfahren nach einem der vorangegangenen Ansprüche auf einem Prozessor ausführen kann, wenn er auf einer Datenverarbeitungsanlage ausgeführt wird. Zudem ist ein System Gegenstand der Erfindung, welches eine Servereinrichtung der hierin beschriebenen Art und das erste und/oder zweite Endgerät umfasst.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:
- Fig. 1: eine schematische Darstellung eines Endgeräts, welches mit einem als Mobilfunknetz ausgestalteten Kommunikationsnetz verbunden ist, in dem in Konfigurationsserver enthalten ist,
- Fig. 2: eine schematische und auszugsweise Darstellung einer als Baumstruktur ausgestalteten Datenstruktur zur Speicherung von Konfigurationsdaten in dem Endgerät,

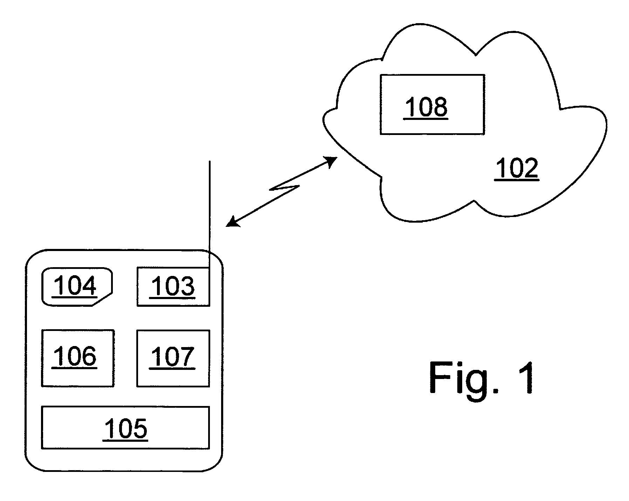

Die nachfolgend beispielhaft erläuterten Ausführungsformen der Erfindung betreffen die Konfiguration von Mobilfunkendgeräten 101, wie beispielsweise Mobiltelefone, Smartphones, Notebookcomputer oder dergleichen durch einen Mobilfunkbetreiber, in dessen Mobilfunknetz 102 Endgeräte 101 zur Nutzung von in dem Mobilfunknetz 102 bereitgestellten Diensten betrieben werden. Zur Konfiguration von Endgeräten eines bestimmten Gerätemodells wird die modellspezifische Datenstruktur zur Speicherung von Konfigurationsdaten bei wenigstens einem Endgerät 101 bestimmt. Ein solches Endgerät 101, welches mit dem Mobilfunknetz 102 verbunden ist, ist beispielhaft in der schematischen Darstellung der Figur 1 gezeigt. Mit der Kenntnis der Konfigurationsdatenstruktur des dargestellten Endgeräts 101 kann der Mobilfunkanbieter weitere Endgeräte 101 desselben Modells konfigurieren.

Das in der Figur 1 gezeigte Endgerät 101 beinhaltet ein Funkmodul 103, mit dem Funkverbindungen zwischen dem Endgerät 101 und in der Figur nicht dargestellten Funkkomponenten des Mobilfunknetzes 102 aufgebaut werden können, wodurch dem Endgerät 101 der Zugriff auf die mittels des Mobilfunknetzes 102 bereitgestellten Dienste ermöglicht wird. Das Funkmodul 103 ist an die Funktechnologie des Mobilfunknetzes 102 angepasst, bei dem es sich beispielsweise um ein GSM (Global System for Mobile Communications)- oder UMTS (Universal Mobile Telecommunications System)-Mobilfunknetz handeln kann. Neben Diensten zur Sprachkommunikation umfassen mittels des Mobilfunknetzes 102 bereitgestellte Dienste beispielsweise Mobilfunkdienste für den Datenzugriff auf das Internet und/oder andere Computernetze, Nachrichtendienste, wie etwa SMS (Short Message Service), MMS (Multimedia Messaging Service) und E-Mail. Jedem Dienst ist vorzugsweise ein Client des Endgeräts 101 zugeordnet, der ein oder mehrere Softwareprogramme zur Nutzung des Dienstes umfassen kann. Wie weiter unten erläutert wird, können die einzelnen Clients des Endgeräts 101 separat konfiguriert werden.

Für den Zugriff auf das Mobilfunknetz 102 ist weiterhin ein Teilnehmeridentifikationsmodul 104 in dem Endgerät 101 vorgesehen. Das Teilnehmeridentifikationsmodul 104 stellt Informationen und Prozesse für die Identifizierung und Authentifizierung eines Mobilfunknutzers bzw. einer Mobilfunksubskription in dem Mobilfunknetz 102 bereit, wie etwa eine der Subskription eindeutig zugeordnete Kennung sowie einen bei der Authentisierung eingesetzten Verschlüsselungsalgorithmus, und enthält zudem Daten und Prozesse für die Steuerung des Zugriffs des Endgeräts 101 auf das Mobilfunknetz 102. In einer Ausgestaltung ist das Teilnehmeridentifikationsmodul in einer Chipkarte enthalten, die in einen in der Figur nicht gezeigten Kartenleser des Endgeräts 101 eingesetzt werden kann, um mit dem Endgerät 101 verbunden zu werden. Gleichfalls kann das Teilnehmeridentifikationsmodul 104 jedoch auch in anderer Weise ausgestaltet sein. Falls das Endgerät 101 in einem GSM- oder UMTS-Mobilfunknetz eingesetzt wird, ist das Teilnehmeridentifikationsmodul 104 als ein SIM (Subscriber Identification Module) bzw. USIM (Universal SIM) ausgestaltet.

Zur Interaktion mit dem Bediener weist das Endgerät 101 eine Bedienerschnittstelle 105 auf, die in der Figur nicht dargestellte Eingabemittel zur Erfassung von Nutzereingaben und ebenfalls nicht dargestellte Ausgabemittel zur Ausgabe von Informationen an den Nutzer umfasst. Die Eingabemittel können beispielsweise eine Tastatur, einen Joystick und/oder ein Touchscreen umfassen sowie ein Mikrofon zur Eingabe von akustischen Informationen. Die Ausgabemittel können etwa ein Display zur visuellen Anzeige von Informationen für den Bediener sowie eine Schnittstelle, wie beispielsweise einen Lautsprecher oder Kopfhörer bzw. eine Kopfhörerschnittstelle zur Ausgabe von Audioinformationen beinhalten.

Weiterhin enthält das Endgerät 101 wenigstens einen Prozessor 106 zur Steuerung von Funktionen des Endgeräts 101 und seiner Komponenten sowie zur Ausführung von Programmen, die in dem Endgerät 101 installiert werden können. Der Prozessor 106 ist mit einer Speichereinheit 107 gekoppelt, in dem der Softwarecode zur Ausführung der Steuerfunktionen und der Softwarecode von in dem Endgerät 101 installierten Anwendungen gespeichert sind. Weiterhin sind Nutzerdaten, die beispielsweise empfangene und gesendete Nachrichten und in dem Endgerät verwendet wird, Multimediadateien, wie etwa Audio- oder Bilddateien, in der Speichereinheit 107 hinterlegt.

Die Speichereinheit 107 enthält zudem Konfigurationsdaten, mit denen die Konfiguration des Endgeräts 101 festgelegt wird. Die Konfigurationsdaten enthalten Konfigurationsparameter für den Zugriff des Endgeräts 101 auf Dienste des Mobilfunknetzes 102 und/oder für die Ausführung von Anwendungsprogrammen in dem Endgerät 101. Weitere Konfigurationsparameter für den Zugriff auf das Mobilfunknetz 102 können in dem Teilnehmeridentifikationsmodul 104 gespeichert sein. Die in dem Teilnehmeridentifikationsmodul 104 gespeicherten Konfigurationsparameter werden in dem hier beschriebenen Ausführungsbeispiel jedoch nicht betrachtet.

In der Speichereinheit 107 sind die Konfigurationsparameter jeweils unter einer ihnen zugeordneten Bezeichnung gespeichert. Mittels dieser Bezeichnung können die Konfigurationsparameter von in dem Prozessor 106 ausgeführten Anwendungen bzw. in dem Prozessor ausgeführter Steuerungssoftware adressiert und aus der Steuereinheit ausgelesen werden. Die Bezeichnungen können beispielsweise von dem Hersteller des Endgeräts 101 bei dessen Herstellung in dem Endgerät 101 hinterlegt werden. Grundsätzlich können sämtliche Konfigurationsparameter in einer Tabelle oder einer ähnlichen Datenstruktur in einer einzigen Hierarchieebene gespeichert sein. Vorteilhaft ist es jedoch vorgesehen, dass die Konfigurationsparameter in einer hierarchischen Datenstruktur hinterlegt werden. Bei dieser Datenstruktur handelt es sich in einer Ausgestaltung um eine Baumstruktur. Eine konkrete Ausführungsform sieht vor, dass die Datenstruktur als eine Baumstruktur gemäß der OMA DM-Spezifikation ausgestaltet ist.

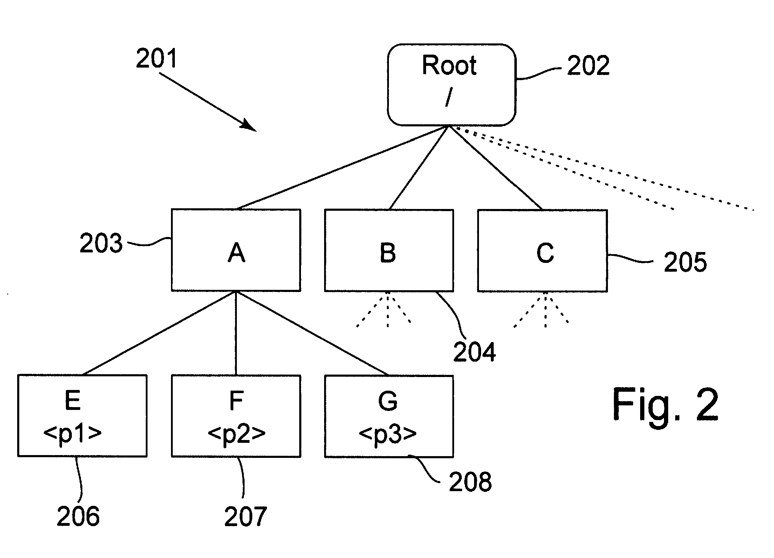

Ein Ausschnitt aus einer Baumstruktur 201, die zur Hinterlegung der Konfigurationsparameter verwendet werden kann, ist schematisch in der Figur 2 gezeigt. Die Baumstruktur 201 ist hierarchisch in mehreren Ebenen aufgebaut und besitzt eine Wurzel 202 ("Root", "/"), von der ausgehend sich die Baumstruktur 201 verzweigt. Dabei können der Wurzel 202 und weiteren Knoten des Baums jeweils ein oder mehrere Kinderknoten zugordnet werden. Die Kinderknoten sind jeweils in der nächsttieferen Ebene des Baums angeordnet. Ein Knoten, dem wenigstens ein Kinderknoten zugeordnet ist, wird als "innerer Knoten" der Baumstruktur 201 bezeichnet. Ein Knoten, dem kein Kinderknoten zugeordnet ist, heißt auch Blattknoten. Bei der in der Figur 2 beispielhaft dargestellten Baumstruktur 201 handelt es sich bei den Knoten 203-205 um innere Knoten und bei dem Knoten 206-208 um Blattknoten.

Jedem Knoten ist eine Bezeichnung zugeordnet, die zur Adressierung des Knotens angegeben werden kann. Die in der Figur 2 beispielhaft dargestellten Knoten haben die Bezeichnungen "A"-"G". Es ist zweckmäßig, bei der Adressierung den Pfad durch den Baum anzugeben, d.h. den zu adressierenden Knoten sowie alle Knoten, die ausgehend von der Wurzel 202 zu durchlaufen sind, um zu dem zu adressierenden Knoten zu gelangen. Die Adressierung des Knotens 208 lautet mit dieser Vorschrift "/A/G".

Grundsätzlich kann in jedem Knoten des Baums ein Konfigurationsparameterwert gespeichert werden. Es hat sich jedoch als zweckmäßig erwiesen, dass Parameterwerte lediglich in den Blattknoten der Baumstruktur gespeichert werden. In der schematischen Darstellung der Figur 2 sind daher Parameterwerte <p1 >, <p2> und <p3> nur in den Blattknoten 206-208 mit den Bezeichnungen E-G gespeichert. Wenn die Speicherung von Parameterwerten ausschließlich in den Blattknoten vorgesehen ist, dienen innere Knoten der Baumstruktur dazu, die Konfigurationsparameter geeignet zu gruppieren und auf diese Weise eine übersichtliche Konfiguration des Endgeräts 101 zu ermöglichen. Die Bezeichnungen, die den inneren Knoten zugeordnet sind, entsprechen dabei den Bezeichnungen der Gruppen. Gruppen von Konfigurationsparametern können auf diese Weise in mehreren Ebenen jeweils einer größeren Gruppe von Konfigurationsparametern zugeordnet werden, wobei die Zusammenfassung in jeder Ebene anhand eines inneren Knotens der Baumstruktur erfolgt. Innerhalb der in der Figur 2 beispielhaft dargestellten Baumstruktur werden die in den Blattknoten 206-208 gespeicherten Konfigurationsparameter durch den inneren Knoten 203 zu einer Gruppe mit der Bezeichnung "A" zusammengefasst.

Vorzugsweise werden in der Baumstruktur auch jeweils die Konfigurationsparameter zu einer Gruppe zusammengefasst, die einem Client des Endgeräts 101 zugeordnet sind. Dies geschieht auf einer bestimmten Ebene der Baumstruktur, wobei sich die Ebenen für verschiedene Clients voneinander unterscheiden können. Innerhalb einer Gruppe, die einem bestimmten Client zugeordnet ist, können Untergruppen angelegt werden, in denen Konfigurationsparameter, die dem Client zugeordnet sind, zur Erhöhung der Übersichtlichkeit gruppiert werden.

Die Konfigurationsparameter können beliebige alphanumerische Werte annehmen, die in den dafür vorgesehenen Knoten der Baumstruktur gespeichert werden. Beispiele für Werte, welche Konfigurationsparameter für Nachrichtendienste beinhalten können, sind Adressen von Servern für den Netzzugang, wie etwa "web.vodafone.de", Kennungen, welche für das Absenden oder Abrufen von Nachrichten verwendet werden, die Art des Abrufens von Nachrichten (z.B. automatisch in vorgegebenen Zeitabständen oder manuell), Formate der Nachrichten, die Art der Verbindung zu den Servern (z.B. verschlüsselt oder unverschlüsselt) usw.. Innerhalb der Konfigurationsdatenstruktur können einzelne Parameterwert mehrfach auftreten. Insbesondere kann es vorkommen, dass ein bestimmter Parameterwert in den Konfigurationsdaten verschiedener Clients enthalten ist. So kann beispielsweise ein bestimmter Netzzugang von mehreren Clients, wie beispielsweise einem Internetbrowsing- und einem E-Mail-Client verwendet werden. Da die mit dem Endgerät 101 genutzten Dienste bzw. die zugehörigen Clients und die zugehörigen Konfigurationsparameter dem Fachmann grundsätzlich bekannt sind, werden die Konfigurationsparameter hier nicht weitergehend dargestellt.

Die Konfigurationsdatenstruktur des Endgeräts 101 kann durch externe Anweisungen angepasst werden. Die Anpassungen umfassen grundsätzlich sämtliche Modifikationen der Datenstruktur der Konfigurationsdaten. Insbesondere umfassen die möglichen Anpassungen das Ergänzen, Entfernen oder Umbenennen von Knoten der Baumstruktur. Des Weiteren können Konfigurationsparameterwerte in den Knoten gespeichert, geändert und gelöscht werden. Die Anpassungen werden anhand von Anweisungen vorgenommen, in denen der anzupassende Knoten anhand seiner bestehenden oder zukünftigen Bezeichnung angegebenen wird. Wie zuvor beschriebenen wird vorzugsweise der Pfad innerhalb der Baumstruktur zu dem zu verändernden bzw. zu erstellenden Knoten angegeben. Ein Konfigurationsparameterwert, der in einem Knoten erstmalig gespeichert werden oder einen bereits in dem Knoten gespeicherten Wert ersetzen soll, wird ebenfalls in den Anweisungen angegeben. In einer Ausgestaltung kann die Baumstruktur gemäß der OMA DM-Spezifikation und den zugehörigen Anweisungen angepasst werden.

Die Anweisungen werden in Konfigurationsnachrichten an das Endgerät 101 übermittelt. In einer Konfigurationsnachricht kann auch eine Mehrzahl von Anweisungen zur Anpassung einer Mehrzahl von Knoten der Datenstruktur enthalten sein. Bei der in der Figur 1 dargestellten Ausgestaltung des Konfigurationssystems werden die Konfigurationsnachrichten von einem Konfigurationszentrum 108 über das Mobilfunknetz 102 an das Endgerät 101 gesendet. Hierzu kann grundsätzlich jeder geeignete Übermittlungsdienst des Mobilfunknetzes 102 genutzt werden. In einer Ausführungsform werden die Konfigurationsnachrichten als WAP (Wireless Application Protocol)-Push-Nachrichten an das Endgerät 101 gesendet. In weiteren Ausführungsformen können jedoch auch Nachrichtendienste, wie etwa SMS, genutzt werden. Das Konfigurationszentrum 108 ist bei der in der Figur 1 gezeigten Ausgestaltung in dem Mobilfunknetz 102 angeordnet. In dieser Ausgestaltung kann das Konfigurationszentrum 108 beispielsweise von dem Mobilfunkanbieter des Mobilfunknetzes 102 betrieben werden. Gleichfalls ist es jedoch auch möglich, das Konfigurationszentrum 108 außerhalb des Mobilfunknetzes 102 anzuordnen.

Um eine Fernkonfiguration des Endgeräts mittels Konfigurationsnachrichten, insbesondere mittels OMA DM-Nachrichten, vornehmen zu können, wird das Endgerät 101 zuvor in geeigneter Weise vorkonfiguriert. Hierbei werden insbesondere Informationen über das Konfigurationszentrum 108 sowie Authentisierungsdaten, welche es dem Endgerät 101 erlauben, Konfigurationsnachrichten des Konfigurationszentrums 108 zu authentisieren, in dem Endgerät 101 hinterlegt. Nach der Vorkonfiguration ist die Konfiguration mithilfe von Konfigurationsnachrichten des Konfigurationszentrums 108 grundsätzlich möglich.

Um die Konfiguration des Endgeräts 101 anhand von Konfigurationsnachrichten vornehmen bzw. verändern zu können, ist es jedoch erforderlich, die Datenstruktur, in der die Konfigurationsparameter in dem Endgerät 101 gespeichert werden, zu kennen. Bei der zuvor dargestellten Baumstruktur zur Speicherung der Konfigurationsdaten müssen insbesondere die Blattknoten bekannt sein, in denen Konfigurationsparameterwerte zu speichern sind, sowie die inneren Knoten, über die der Pfad zu den Blattknoten verläuft. Bei einer Änderung von bereits in dem Endgerät 101 gespeicherten Konfigurationsparameterwerten kann die Konfigurationszentrale 108 grundsätzlich die in dem Endgerät 101 gespeicherten Datenstruktur mittels eines entsprechenden Steuerbefehls aus dem Endgerät 101 auslesen und auswerten. Hierdurch erlangt die Konfigurationszentrale Kenntnis über die Blattknoten und inneren Knoten der Datenstruktur. Wenn jedoch Konfigurationsparameterwerte erstmalig in dem Endgerät 101 gespeichert werden sollen, ist es in der Regel erforderlich, neue Blattknoten und innere Knoten innerhalb der in dem Endgerät 101 gespeicherten Datenstruktur zu erzeugen. Die zu erzeugenden Knoten können jedoch nicht durch eine Auswertung der bestehenden Datenstruktur ermittelt werden. Kenntnis der Datenstruktur mit den zu erzeugenden inneren Knoten und Blattknoten erlangt das Konfigurationszentrum durch eine Auswertung, die im Folgenden beschrieben wird. Wie deutlich wird, entspricht diese Auswertung quasi einem "Selbstlernprozess" und erfordert im Wesentlichen keine manuellen Eingaben der Datenstruktur in der Konfigurationszentrale.

Im Rahmen der Auswertung erstellt das Konfigurationszentrum ein oder mehrere endgerätespezifische Konfigurationsprofile, welche für die zukünftige Konfiguration von Endgeräten desselben Typs herangezogen werden können. Die Erzeugung mehrerer Konfigurationsprofile ermöglicht es, einzelne Konfigurationsprofile für verschiedene Clients des Endgeräts zu erstellen, wobei jedes einzelne Konfigurationsprofil beispielsweise für einen Client vorgesehen ist. Die Konfigurationsprofile geben an, wie eine Ausgangskonfiguration eines Endgeräts 101 bei der Konfiguration mithilfe von entsprechenden Anweisungen anzupassen ist. Insbesondere wird angegeben, welche bestehenden Knoten der Konfigurationsdatenstruktur mit Konfigurationsparameterwerten neu zu befüllen sind bzw. zu manipulieren sind (Veränderung eines zuvor gespeicherten Werts) und welche neue Knoten der Konfigurationsdatenstruktur zu erzeugen sind. Bei der Ausgangskonfiguration kann es sich um die Konfiguration handeln, die nach der Herstellung bzw. nach der Auslieferung des Endgeräts 101 durch den Hersteller vorliegt. Diese Ausgangskonfiguration kann mittels des Konfigurationszentrums 108 von dem Mobilfunkanbieter oder einer anderen Entität angepasst werden, um Mobilfunkdienste in dem Mobilfunknetz 102 nutzen zu können und/oder Anwendungen nutzen zu können, die von dem Mobilfunkanbieter oder der anderen Entität in dem Endgerät 101 installiert werden.

Der Auswertung liegt eine Erstkonfiguration des Endgeräts 101 zugrunde, die hier auch als Provisionierung bezeichnet wird und ebenfalls von dem Konfigurationszentrum ausgeführt wird. Bei der Provisionierung werden die relevanten Konfigurationsparameter bzw. ihre Werte erstmalig in dem Endgerät 101 hinterlegt. Um die Provisionierung zum Zwecke der Auswertung bzw. Ermittlung der Konfigurationsdatenstruktur auszuführen, wird die Provisionierung nicht anhand der zuvor erläuterten Anweisungen zur Anpassung einzelner Knoten der Datenstruktur vorgenommen. Insbesondere wird die Provisionierung nicht mittels des OMA DM vorgenommen. Zur Provisionierung wird ein spezieller Provisionsmechanismus eingesetzt. Hierbei kann es sich insbesondere um den an sich bekannten und von der OMA spezifizierten OMA CP-Mechanismus handeln.

Bei der Provisionierung des Endgeräts 101 wird eine Konfigurationsnachricht, die hier auch als Provisionierungsnachricht bezeichnet wird, an das Endgerät 101 gesendet. Die Provisionierungsnachricht enthält die Werte der Konfigurationsparameter, die in dem Endgerät 101 innerhalb der Konfigurationsdatenstruktur zu hinterlegen sind. Die Konfigurationsparameterwerte werden in der Provisionierungsnachricht in einem vorgegebenen Format und mit vorgegebenen Bezeichnungen angegebenen. Die in der Provisionierungsnachricht anzugebenden Bezeichnungen der Konfigurationsparameter sind vorzugsweise standardisiert, wie es beispielsweise bei dem zuvor bereits genannten OMA CP-Mechanismus der Fall ist, und brauchen nicht der Bezeichnung zu entsprechen, die den Knoten der Datenstruktur, in denen die Konfigurationsparameterwerte in dem Endgerät 101 gespeichert werden, entsprechen. Zudem kann vorgesehen sein, dass in der Provisionierungsnachricht lediglich die in dem Endgerät 101 zu hinterlegenden Parameterwerte mit den vorgegebenen Bezeichnungen enthalten sind, jedoch keine Angaben hinsichtlich der inneren Knoten der Konfigurationsdatenstruktur bzw. der Pfade, unter denen die Konfigurationsparameterwerte in der Datenstruktur gespeichert werden.

Die Provisionierungsnachricht wird in dem Konfigurationszentrum 108 erzeugt und ebenfalls über das Mobilfunknetz 102 an das Endgerät 101 gesendet. Hierzu kann ein geeigneter Datenübertragungsdienst eingesetzt werden. In einer Ausgestaltung wird die Provisionierungsnachricht mittels des SMS an das Endgerät 101 gesendet. Es können jedoch auch andere Datenübertragungsdienste, wie etwa WAP Push eingesetzt werden. Die Provisionierungsnachricht hat ein spezielles Format, welches in dem Endgerät 101 erkannt wird. Aufgrund des Formats wird die Provisionierungsnachricht innerhalb des Endgeräts 101 an eine Provisionierungsanwendung übergeben. Dies geschieht vorzugsweise transparent, d.h. für den Bediener des Endgeräts 101 nicht sichtbar. Die Provisionierungsanwendung wird vorzugsweise bereits bei der Herstellung des Endgeräts 101 in dem Endgerät 101 installiert.

Die Provisionierungsanwendung des Endgeräts 101 wertet die empfangene Provisionierungsnachricht aus und speichert die enthaltenen Konfigurationsparameterwerte in der Konfigurationsdatenstruktur des Endgeräts 101. Dabei werden auch benötigte und zuvor nicht vorhandene Knoten der Datenstruktur - sowohl innere Knoten als auch Blattknoten - von der Provisionierungsanwendung erzeugt. Eine Logik zur Auswertung der Provisionierungsnachricht und zur Umsetzung in eine entsprechenden Anpassung der Konfigurationsdatenstruktur ist in der Provisionierungsanwendung implementiert. Diese Logik verwendet die standardisierten und auch in der Provisionierungsnachricht enthaltenen Bezeichnungen der Konfigurationsparameter, um diese in die Konfigurationsdatenstruktur einzupflegen. Dabei ist die Provisionierungsanwendung insbesondere auch dazu in der Lage, einen Konfigurationsparameter unter einer abweichenden Bezeichnung in einem bestimmten Knoten der Konfigurationsdatenstruktur zu speichern. Hierdurch können die Konfigurationsparameter in der Datenstruktur unter herstellerspezifischen Bezeichnungen abgelegt werden. Zudem ist die Provisionierungsanwendung dazu in der Lage, Blattknoten sowie innere Knoten der Konfigurationsdatenstruktur zu erzeugen, falls dies erforderlich sein sollte, d.h., wenn ein Knoten, der innerhalb des Pfads eines Konfigurationsparameters vorgesehen ist, nicht bereits in der Konfigurationsdatenstruktur enthalten ist.

Nach der Auswertung der Provisionierungsnachricht durch die Provisionierungsanwendung und Speicherung der in der Provisionierungsnachricht enthaltenen Konfigurationsparameterwerte in der Konfigurationsdatenstruktur des Endgeräts 101, liegt die Konfigurationsdatenstruktur mit den erforderlichen Knoten innerhalb des Endgeräts 101 vor. Diese, die erforderlichen Knoten enthaltende Datenstruktur wird bei der Auswertung durch das Konfigurationszentrum 108 herangezogen.

Zur Durchführung der Auswertung wird ein Endgerät verwendet, das zunächst in der Ausgangskonfiguration vorliegt. Wie zuvor erläutert, kann es sich dabei um ein Endgerät 101 in dem Zustand handeln, in dem es von dem Hersteller ausgeliefert wird. Es ist vorgesehen, dass das Konfigurationszentrum 108 die Konfigurationsdatenstruktur dieses Endgeräts 101 mittels eines entsprechenden an das Endgerät 101 gesendeten Steuerbefehls ausliest, bevor die Provisionierungsnachricht an das Endgerät 101 gesendet wird. Die dabei ausgelesene Konfigurationsdatenstruktur entspricht der von der Konfigurationszentrale 108 zugrunde gelegten Ausgangskonfigurationsdatenstruktur und wird in der Konfigurationszentrale 108 gespeichert. Zum Auslesen der Ausgangskonfiguration wird vorzugsweise ein OMA DM-Steuerbefehl verwendet, mit dem die die Konfigurationsdatenstruktur ausgelesen werden kann ("tree discovery").

Um das Auslesen der Ausgangskonfiguration zu ermöglichen, wird vorzugsweise zuvor die Vorkonfiguration des Endgeräts 101 vorgenommen. In einer Ausgestaltung erfolgt die Vorkonfiguration wiederum mithilfe des OMA CP-Mechanismus, wobei eine entsprechende Nachricht zur Vorkonfiguration an das Endgerät 101 gesendet wird. Die Nachricht wird vorzugsweise separat gesendet, bevor die Provisionierungsnachricht gesendet und die Ausgangskonfigurationsdatenstruktur ausgelesen wird. Aufgrund des Empfangs der Nachricht werden die zur Vorkonfiguration erforderlichen Parameter in dem Endgerät 101 abgelegt. Dabei wird ausgenutzt, dass die Hinterlegung mittels des OMA CP-Mechanismus ohne weitere Informationen über die Konfigurationsdatenstruktur 101 des Endgeräts 101 erfolgen kann. Die Hinterlegung der Vorkonfiguration kann eine Interaktion mit dem Nutzer des Endgeräts 101 umfassen, bei der dieser beispielsweise einer Fernkonfiguration mittels des OMA DM-Mechanismus grundsätzlich zustimmt.

Nachdem die Ausgangskonfigurationsdatenstruktur aus dem Endgerät ausgelesen worden ist, sendet die Konfigurationszentrale 108 die zuvor beschriebene Provisionierungsnachricht an das Endgerät 101. Die darin enthaltenen Konfigurationsparameterwerte werden ebenfalls in der Konfigurationszentrale 108 gespeichert. Die Provisionierungsnachricht wird in der zuvor erläuterten Weise innerhalb des Endgeräts 101 ausgewertet und verarbeitet, um die Konfigurationsdatenstruktur des Endgeräts 101 entsprechend anzupassen und dabei die in der Provisionierungsnachricht enthaltenen Konfigurationsparameterwerte in der Konfigurationsdatenstruktur zu hinterlegen. Dabei kann wiederum eine Nutzerinteraktion vorgesehen sein, bei welcher der Nutzer der Installation der Parameter zustimmt.

Nach Ablauf einer vorgegebenen Zeitspanne nach der Übermittlung der Provisionierungsnachricht an das Endgerät 101 liest die Konfigurationszentrale die Konfigurationsdatenstruktur des Endgeräts 101 mittels eines entsprechenden an das Endgerät 101 gesendeten Steuerbefehls erneut aus. Die Zeitspanne wird so lange gewählt, dass die Provisionierungsanwendung des Endgeräts 101 die Provisionierungsnachricht innerhalb der Zeitspanne vollständig auswerten und die Anpassungen der Konfigurationsdatenstruktur vornehmen kann. Somit ist sichergestellt, dass die ausgelesene Konfigurationsdatenstruktur die aufgrund der Provisionierungsnachricht vorgenommenen Anpassungen enthält.

Die ausgelesene Konfigurationsdatenstruktur mit den durch die Provisionierungsanwendung vorgenommenen Änderungen, die im Folgenden auch als gewünschte Konfigurationsdatenstruktur bezeichnet wird, wird von der Konfigurationszentrale sodann mit der zuvor ausgelesenen Ausgangskonfigurationsdatenstruktur verglichen. Bei dem Vergleich werden die Abweichungen der gewünschten Konfigurationsdatenstruktur von der Ausgangsdatenstruktur festgestellt. Hierbei handelt es sich um die Anpassungen, die aufgrund der Provisionierungsnachricht vorgenommen worden sind.

Aus den festgestellten Abweichungen wird ein Konfigurationsprofil für das Endgerät 101 erstellt. Anhand dieses Konfigurationsprofils können sodann Konfigurationsnachrichten generiert werden, die Anweisungen enthalten, mit denen die Ausgangsdatenstruktur in die gewünschte Konfigurationsdatenstruktur überführt werden kann. Hierbei handelt es sich um Anweisungen, mit denen Knoten der gewünschten Konfigurationsdatenstruktur erzeugt werden, die in der Ausgangsdatenstruktur nicht vorhanden sind, sowie um Anweisungen zu gegebenenfalls erforderlichen Manipulationen bereits in der Ausgangsdatenstruktur vorhandener Knoten. Derartige Manipulationen können insbesondere in der Veränderung eines in einem Knoten gespeicherten Parameterwertes bestehen.

Wie zuvor erläutert, können anstelle eines Konfigurationsprofils auch mehrere Konfigurationsprofile erstellt werden, die sich jeweils auf die Konfiguration eines Clients beziehen. Ein solches Konfigurationsprofil enthält die Abweichung der gewünschten Konfigurationsdatenstruktur und der Ausgangsdatendatenstruktur, die sich auf die Konfiguration des jeweiligen Dienstes oder der jeweiligen Anwendung beziehen. Es kann herangezogen werden, um Anweisungen zu erzeugen, mit denen die Ausgangsdatenstruktur zur Konfiguration des Dienstes oder der Anwendung angepasst wird. Vorzugsweise werden die Konfigurationsprofile in mehreren Schritten ermittelt, die jeweils die Konfiguration anhand einer Provisionierungsnachricht und das nachfolgende Auslesen und die beschriebenen Auswertung der geänderten Konfigurationsdatenstruktur umfassen. In jedem Schritt wird die Auswertung für einen Client des Endgeräts 101 vorgenommen.

Die zuvor beschriebenen Konfigurationsprofile können nach ihrer Erstellung von der Konfigurationszentrale eingesetzt werden, um die Erstkonfiguration von Endgeräten desselben Typs wie das für die Auswertung herangezogene Endgerät - d.h. die Provisionierung dieser Endgeräte - mittels entsprechender Konfigurationsnachrichten vorzunehmen. Die Konfigurationsnachrichten enthalten Anweisungen zur Anpassung der Ausgangsdatenstruktur, umfassend Anweisungen zur Erzeugung der benötigten und noch nicht vorhandenen Knoten und zur ggf. erforderlichen Anpassung bereits in der Ausgangsdatenstruktur vorhandener Knoten.

Bei der Auswertung der ausgelesenen Konfigurationsdatenstruktur und zur Erstellung der Konfigurationsprofile bestimmt die Konfigurationszentrale 108 innerhalb der ausgelesenen gewünschten Konfigurationsdatenstruktur die Bezeichnungen der Knoten, in denen die in der Provisionierungsnachricht enthaltenen Konfigurationsparameterwerte jeweils innerhalb der gewünschten Konfigurationsdatenstruktur gespeichert sind. Auf diese Weise ermittelt die Konfigurationszentrale 108 die Knoten mitsamt ihren endgerätespezifischen Bezeichnungen und die zugehörigen Pfade für einzelne Konfigurationsparameter.

Die so ermittelten Knotenbezeichnungen werden vorzugsweise mitsamt Pfad in der Konfigurationszentrale 108 hinterlegt und können zukünftig dazu verwendet werden, Konfigurationsnachrichten mit Anweisungen für die gezielte Anpassung einzelner Knoten zur Hinterlegung oder Veränderung einzelner Konfigurationsparameter zu erzeugen. Auf diese Weise können in Endgeräten 101 desselben Typs, wie das für die Auswertung herangezogene Endgerät 101 einzelne Konfigurationsparameter gezielt gespeichert oder angepasst werden. Gleichfalls können einzelne Parameter gezielt von der Konfigurationszentrale 108 aus einem Endgerät 101 ausgelesen werden. Diese Fähigkeiten der Konfigurationszentrale können beispielsweise zur Fehlerbehebung oder zur nachträglichen Anpassung einzelner Parameter nach der Erstkonfiguration eines Endgeräts 101 genutzt werden.

Die zuvor beschriebene Auswertung kann grundsätzlich unabhängig von dem Vergleich der ausgelesenen gewünschten Konfigurationsdatenstruktur und der Ausgangsdatenstruktur in der Konfigurationszentrale 108 vorgenommen werden. Anhand dieses Vergleichs können jedoch Knoten ermittelt werden, die in der Ausgangskonfiguration nicht vorhanden waren und von dem Endgerät ergänzt worden sind, und die Bezeichnung dieser Knoten sowie ihre Position innerhalb der Konfigurationsdatenstruktur können bestimmt werden. Hierbei handelt es sich innere Knoten oder um Blattknoten, die in der ergänzten Konfigurationsdatenstruktur, jedoch nicht in der Ausgangsdatenstruktur enthalten sind. Anweisungen zur Ergänzung der anhand des Vergleichs ermittelten, hinzugekommenen Knoten werden in die Konfigurationsprofile übernommen, so dass sie zukünftig bei der Konfiguration von Endgeräten desselben Typs angelegt werden.

Wie zuvor erläutert, wird die Auswertung, bei der die Parameterbezeichnungen ermittelt und die zu ergänzenden Knoten bestimmt werden, in mehreren Schritten für jeweils einen Client des Endgeräts 101 vorgenommen, wobei in jedem Schritt das Konfigurationsprofil des entsprechenden Clients bestimmt wird. Auf diese Weise lassen sich Mehrdeutigkeiten auflösen bzw. vermeiden, die dadurch entstehen können, dass ein Parameterwert in der Konfiguration mehrerer Clients (ggf. mit unterschiedlicher Bezeichnung) berücksichtigt wird.

Aus den Konfigurationsprofilen der einzelnen Clients kann ein Gesamtkonfigurationsprofil für das Endgerät 101 erstellt werden, welches zukünftig für die Konfiguration von Endgeräten 101 desselben Typs eingesetzt werden kann.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren zum Konfigurieren von Endgeräten (101), bei dem Werte von Parametern in den Endgeräten (101) innerhalb einer Datenstruktur gespeichert werden, welche jeweils ein Element mit einer zugehörigen Bezeichnung für einen Parameter enthält, umfassend die folgenden Schritte:
- Übermitteln einer ersten Konfigurationsnachricht an ein erstes Endgerät (101), wobei es sich bei der ersten Konfigurationsnachricht um eine Konfigurationsnachricht gemäß der OMA Client Provisioning-Spezifikation handelt und wobei die Konfigurationsnachricht Parameterwerte enthält und das Endgerät (101) über Anwendungen verfügt, durch welche die Parameterwerte aufgrund des Empfangs der Konfigurationsnachricht automatisch in den zugehörigen Elementen der in dem ersten Endgerät (101) gespeicherten Datenstruktur hinterlegt werden,
- Auslesen der die Parameterwerte enthaltenden Datenstruktur aus dem ersten Endgerät (101),
- Auswerten der ausgelesenen Datenstruktur in einer Servereinrichtung, wobei die Auswertung eine Ermittlung der Elemente der ausgelesenen Datenstruktur, in denen die Parameterwerte gespeichert worden sind, und eine Bestimmung der Bezeichnungen dieser Elemente und/oder einen Vergleich zwischen der ausgelesenen Datenstruktur und einer weiteren, vor Übermittlung der ersten Konfigurationsnachricht aus dem Endgerät (101) ausgelesenen Ausgangsdatenstruktur umfasst,
- Erzeugen einer zweiten Konfigurationsnachricht mit Anweisungen zur Hinterlegung wenigstens eines der Parameterwerte in einem zweiten Endgerät (101), wobei die Anweisungen in Abhängigkeit von dem Ergebnis der Auswertung generiert werden und die ermittelten Bezeichnung des Elements, in dem der Parameterwert gespeichert ist, enthalten, und
- Übermitteln der zweiten Konfigurationsnachricht an das zweite Endgerät (101).

2. Verfahren nach Anspruch 1, wobei die erste Konfigurationsnachricht einem ersten Typ und die zweite Konfigurationsnachricht einem zweiten Typ angehört.

3. Verfahren nach einem der vorangegangenen Ansprüche, wobei die zweite Konfigurationsnachricht Anweisungen umfasst, mit denen die Abweichungen der ausgelesenen Datenstruktur von der Ausgangsdatenstruktur erzeugt werden können.

4. Verfahren nach einem der vorangegangenen Ansprüche, wobei aufgrund der Auswertung der aus dem ersten Endgerät (101) ausgelesenen Datenstruktur wenigstens ein gerätetypspezifisches Konfigurationsprofil erstellt wird und wobei die zweite Konfigurationsnachricht anhand des Konfigurationsprofils erzeugt wird.

5. Verfahren nach einem der vorangegangenen Ansprüche, wobei die Auswertung eine Ermittlung von Elementen der Datenstruktur umfasst, die aufgrund der ersten Konfigurationsnachricht in dem ersten Endgerät (101) angelegt werden.

6. Verfahren nach Anspruch 4, wobei die zweite Konfigurationsnachricht Anweisungen zur Anlage der ermittelten Elemente innerhalb der Datenstruktur in dem zweiten Endgerät (101) umfasst.

7. Verfahren nach einem der vorangegangenen Ansprüche, wobei die erste Konfigurationsnachricht Parameterwerte enthält, die sich auf einen ersten Client beziehen, und eine erste Auswertung der ausgelesenen Datenstruktur zunächst für diesen Client vorgenommen wird, wobei eine weitere Konfigurationsnachricht gesendet wird, die Parameterwerte in Bezug auf einen weiteren Client des Endgeräts (101) enthält und eine weitere Auswertung einer weiteren ausgelesenen Datenstruktur in Bezug auf den weiteren Client vorgenommen wird, und wobei die Anweisungen in der zweiten Konfigurationsnachricht in Abhängigkeit von der ersten und der weiteren Auswertung generiert werden.

8. Verfahren nach einem der vorangegangenen Ansprüche, wobei die Datenstruktur einen Baum umfasst, dessen Elemente Knoten (203, 204, 205, 206, 207, 208) sind, die jeweils einen Parameterwert enthalten und/oder mit einem weiteren Knoten (203, 204, 205) verbunden sind.

9. Verfahren nach einem der vorangegangenen Ansprüche, wobei es sich bei dem ersten und dem zweiten Endgerät (101) um Endgeräte (101) genau eines Typs handelt.

10. Verfahren nach einem der vorangegangenen Ansprüche, wobei die erste und/oder die zweite Konfigurationsnachricht über ein Mobilfunknetz (102) gesendet werden.

11. Computerprogramm mit einem Softwarecode, der so angepasst ist, dass er ein Verfahren nach einem der vorangegangenen Ansprüche auf den Prozessoren einer Servereinrichtung und eines ersten und zweiten Endgerätes ausführen kann.

12. Servereinrichtung zum Konfigurieren von Endgeräten (101), wobei mittels der Servereinrichtung Werte von Parametern in den Endgeräten (101) innerhalb einer Datenstruktur gespeichert werden, welche jeweils ein Element mit einer zugehörigen Bezeichnung für einen Parameter enthält und wobei die Servereinrichtung dazu ausgestaltet ist,
- eine erste Konfigurationsnachricht an ein erstes Endgerät (101) zu übermitteln, wobei es sich bei der ersten Konfigurationsnachricht um eine Konfigurationsnachricht gemäß der OMA Client Provisioning-Spezifikation handelt und wobei die Konfigurationsnachricht Parameterwerte enthält_und das Endgerät (101) über Anwendungen verfügt, durch welche die Parameterwerte aufgrund des Empfangs der Konfigurationsnachricht automatisch in den zugehörigen Elementen der in dem ersten Endgerät (101) gespeicherten Datenstruktur hinterlegt werden,
- die Parameterwerte enthaltenden Datenstruktur aus dem ersten Endgerät (101) auszulesen,
- die ausgelesene Datenstruktur auszuwerten, wobei die Auswertung eine Ermittlung der Elemente der ausgelesenen Datenstruktur, in denen die Parameterwerte gespeichert worden sind, und eine Bestimmung der Bezeichnungen dieser Elemente und/oder einen Vergleich zwischen der ausgelesenen Datenstruktur und einer weiteren, vor Übermittlung der ersten Konfigurationsnachricht aus dem Endgeräte (101) ausgelesenen Ausgangsdatenstruktur umfasst,
- eine zweite Konfigurationsnachricht mit Anweisungen zur Hinterlegung wenigstens eines der Parameterwerte in einem zweiten Endgerät (101) zu erzeugen, wobei die Anweisungen in Abhängigkeit von dem Ergebnis der Auswertung generiert werden und die ermittelte Bezeichnung des Elements, in dem der Parameterwerte gespeichert ist, enthalten, und
- die zweite Konfigurationsnachricht an das zweite Endgerät (101) zu übermitteln.

13. System umfassend eine Servereinrichtung nach Anspruch 12 und das erste und zweite Endgerät (101).

## Claims

1. A method for configuring terminal devices (101) in which values of parameters are stored in the terminal devices (101) within a data structure that, in each case, contains an element with an associated designation for a parameter, said method comprising the following steps:
- a first configuration message is transmitted to a first terminal device (101), whereby the first configuration message is a configuration message according to the OMA Client Provisioning specification, and whereby the configuration message contains parameter values, and the terminal device (101) has applications by means of which, in response to the receipt of the configuration message, the parameter values are automatically stored in the associated elements of the data structure stored in the first terminal device (101),
- the data structure containing the parameter values is read out of the first terminal device (101),
- the read-out data structure is evaluated in a server means, whereby the evaluation comprises a determination of the elements of the read-out data structure in which the parameter values have been stored, and it comprises a determination of the designations of these elements and/or a comparison between the read-out data structure and another initial data structure that was read out of the terminal device (101) before the transmission of the first configuration message,
- a second configuration message with instructions for storing at least one of the parameter values in a second terminal device (101) is generated, whereby the instructions are generated as a function of the result of the evaluation and they contain the determined designation of the element in which the parameter value is stored, and
- the second configuration message is transmitted to the second terminal device (101).

2. The method according to claim 1, wherein the first configuration message is of a first type and the second configuration message is of a second type.

3. The method according to one of the preceding claims, wherein the second configuration message contains instructions by means of which the differences between the read-out data structure and the initial data structure can be generated.

4. The method according to one of the preceding claims, wherein, on the basis of the evaluation of the data structure read out of the first terminal device (101), at least one device-type-specific configuration profile is drawn up, and wherein the second configuration message is generated on the basis of the configuration profile.

5. The method according to one of the preceding claims, wherein the evaluation comprises a determination of elements of the data structure that are stored in the first terminal device (101) on the basis of the first configuration message.

6. The method according to claim 4, wherein the second configuration message contains instructions for placing the determined elements within the data structure in the second terminal device (101).

7. The method according to one of the preceding claims, wherein the first configuration message contains parameter values relating to a first client, and a first evaluation of the read-out data structure is first carried out for this client, wherein another configuration message containing parameter values relating to an additional client of the terminal device (10) is sent and another evaluation of another read-out data structure relating to the additional client is carried out, and wherein the instructions in the second configuration message are generated as a function of the first evaluation and of the additional evaluation.

8. The method according to one of the preceding claims, wherein the data structure comprises a tree whose elements are nodes (203, 204, 205, 206, 207, 208) that each contain a parameter value and/or that are each connected to another node (203, 204, 205).

9. The method according to one of the preceding claims, wherein the first and the second terminal devices (101) are terminal devices (101) of precisely one type.

10. The method according to one of the preceding claims, wherein the first and/or the second configuration messages are sent via a cellular network (102).

11. A computer program with a software code that is adapted in such a way that it can execute a method according to one of the preceding claims on the processors of a server means and of a first and second terminal device.

12. A server means for configuring terminal devices (101), wherein, by means of the server means, values of parameters are stored in the terminal devices (101) within a data structure that, in each case, contains an element with an associated designation for a parameter, and wherein the server means is configured in such a way that
- a first configuration message is transmitted to a first terminal device (101), whereby the first configuration message is a configuration message according to the OMA Client Provisioning specification, and whereby the configuration message contains parameter values, and the terminal device (101) has applications by means of which, in response to the receipt of the configuration message, the parameter values are automatically stored in the associated elements of the data structure stored in the first terminal device (101),
- the data structure containing the parameter values is read out of the first terminal device (101),
- the read-out data structure is evaluated, whereby the evaluation comprises a determination of the elements of the read-out data structure in which the parameter values have been stored, and it comprises a determination of the designations of these elements and/or a comparison between the read-out data structure and another initial data structure that was read out of the terminal device (101) before the transmission of the first configuration message,
- a second configuration message with instructions for storing at least one of the parameter values in a second terminal device (101) is generated, whereby the instructions are generated as a function of the result of the evaluation, and they contain the determined designation of the element in which the parameter value is stored, and
- the second configuration message is transmitted to the second terminal device (101).

13. A system comprising a server means according to claim 12 and the first and second terminal device (101).

## Revendications

1. Procédé de configuration de terminaux (101), selon lequel des valeurs de paramètres sont stockées dans les terminaux (101) au sein d'une structure de données qui contient respectivement un élément avec une désignation associée pour un paramètre, comprenant les étapes suivantes :
- transmission d'un premier message de configuration à un premier terminal (101), le premier message de configuration étant un message de configuration selon la spécification OMA Client Provisioning, et le message de configuration contenant des valeurs paramétriques, et le terminal (101) disposant d'applications par lesquelles les valeurs paramétriques sont déposées automatiquement, en raison de la réception du message de configuration, dans les éléments associés de la structure de données stockée dans le premier terminal (101) ;
- lecture de la structure de données contenant les valeurs paramétriques hors du premier terminal (101) ;
- évaluation de la structure de données lue dans un dispositif serveur, l'évaluation comprenant une détermination des éléments de la structure de données lue dans lesquels les valeurs paramétriques ont été stockées, et une détermination des désignations de ces éléments et/ou une comparaison entre la structure de données lue et une autre structure de données de départ lue hors du terminal (101) avant la transmission du premier message de configuration ;
- génération d'un deuxième message de configuration comportant des instructions pour le dépôt d'au moins l'une des valeurs paramétriques dans un deuxième terminal (101), les instructions étant générées en fonction du résultat de l'évaluation et contenant la désignation déterminée de l'élément dans lequel la valeur paramétrique est stockée ; et
- transmission du deuxième message de configuration au deuxième terminal (101).

2. Procédé selon la revendication 1, le premier message de configuration étant d'un premier type et le deuxième message de configuration étant d'un deuxième type.

3. Procédé selon l'une des revendications précédentes, le deuxième message de configuration comprenant des instructions qui permettent de générer les différences de la structure de données lue par rapport à la structure de données de départ.

4. Procédé selon l'une des revendications précédentes, au moins un profil de configuration spécifique au type d'appareil étant créé sur la base de l'évaluation de la structure de données lue hors du premier terminal (101) et le deuxième message de configuration étant généré sur la base du profil de configuration.

5. Procédé selon l'une des revendications précédentes, l'évaluation comprenant une détermination d'éléments de la structure de données qui sont créés dans le premier terminal (101) sur la base du premier message de configuration.

6. Procédé selon la revendication 4, le deuxième message de configuration comprenant des instructions relatives à la création des éléments déterminés au sein de la structure de données dans le deuxième terminal (101).

7. Procédé selon l'une des revendications précédentes, le premier message de configuration contenant des valeurs paramétriques qui se réfèrent à un premier client, et une première évaluation de la structure de données lue étant effectuée tout d'abord pour ce client, un autre message de configuration étant émis, lequel contient des valeurs paramétriques en rapport avec un autre client du terminal (101), et une autre évaluation d'une autre structure de données lue en rapport avec l'autre client étant effectuée, et les instructions étant générées dans le deuxième message de configuration en fonction de la première évaluation et de l'autre évaluation.

8. Procédé selon l'une des revendications précédentes, la structure de données comprenant une arborescence dont les éléments sont des noeuds (203, 204, 205, 206, 207, 208) qui contiennent respectivement une valeur paramétrique et/ou sont reliés à un autre noeud (203, 204, 205).

9. Procédé selon l'une des revendications précédentes, les premier et deuxième terminaux (101) étant des terminaux (101) d'exactement un type.

10. Procédé selon l'une des revendications précédentes, le premier et/ou le deuxième message de configuration étant émis sur un réseau radio mobile (102).

11. Programme informatique comprenant un code logiciel qui est adapté pour pouvoir exécuter un procédé selon l'une des revendications précédentes sur les processeurs d'un dispositif serveur et d'un premier et d'un deuxième terminal.

12. Dispositif serveur destiné à configurer des terminaux (101), des valeurs de paramètres étant, au moyen du dispositif serveur, stockées dans les terminaux (101) au sein d'une structure de données qui contient respectivement un élément avec une désignation associée pour un paramètre, et le dispositif serveur étant conçu pour :
- transmettre un premier message de configuration à un premier terminal (101), le premier message de configuration étant un message de configuration selon la spécification OMA Client Provisioning, et le message de configuration contenant des valeurs paramétriques, et le terminal (101) disposant d'applications par lesquelles les valeurs paramétriques sont déposées automatiquement, en raison de la réception du message de configuration, dans les éléments associés de la structure de données stockée dans le premier terminal (101) ;
- lire la structure de données contenant les valeurs paramétriques hors du premier terminal (101) ;
- évaluer la structure de données lue, l'évaluation comprenant une détermination des éléments de la structure de données lue dans lesquels les valeurs paramétriques ont été stockées, et une détermination des désignations de ces éléments et/ou une comparaison entre la structure de données lue et une autre structure de données de départ lue hors du terminal (101) avant la transmission du premier message de configuration ;
- générer un deuxième message de configuration comportant des instructions pour le dépôt d'au moins l'une des valeurs paramétriques dans un deuxième terminal (101), les instructions étant générées en fonction du résultat de l'évaluation et contenant la désignation déterminée de l'élément dans lequel la valeur paramétrique est stockée ; et
- transmettre un deuxième message de configuration au deuxième terminal (101).

13. Système comprenant un dispositif serveur selon la revendication 12, ainsi que les premier et deuxième terminaux (101).
